# EUROPÄISCHE PATENTSCHRIFT

(11) **EP 2 701 982 B1**
(45) Veröffentlichungstag und Bekanntmachung des Hinweises auf die Patenterteilung: **30.09.2015**
(21) Anmeldenummer: 12707551.3
(22) Anmeldetag: 02.03.2012
(51) Int. Cl.: B65D 5/74, B65D 75/58

(54) **VERSCHLUSS MIT ADAPTER**
CLOSURE WITH ADAPTER
FERMETURE À ADAPTATEUR

(30) Priorität: 26.04.2011 DE 102011017509
(43) Veröffentlichungstag der Anmeldung: 05.03.2014
(73) Patentinhaber: Robert Bosch GmbH, 70442 Stuttgart (DE)
(72) Erfinder: BARRON, Dan, CH-8200 Schaffhausen (CH)
(86) Internationale Anmeldenummer: PCT/EP2012/053625
(87) Internationale Veröffentlichungsnummer: WO 2012/146423

(56) Entgegenhaltungen:
- WO-A1-95/05996
- WO-A1-2004/083054
- DE-B3-102006 016 113
- US-A1- 2006 261 028

## Beschreibung

Die vorliegende Erfindung betrifft eine Einrichtung zur Bereitstellung von fliessfähigen Medien, insbesondere von flüssigen oder pastösen Massen, die aseptisch verpackt in einem vollständig geschlossenen Behältnis resp. Schlauchbeutel anliegen, umfassend einen Ausgussstutzen mit einem Flansch, der, auf dem Schlauchbeutel befestigt ist, wobei der Ausgussstutzen in einer Mantelwand ein Innengewinde aufweist sowie einen rohrförmigen Adapter mit einem zum Innengewinde des Ausgussstutzens passendes Aussengewinde an einem Einlassende, und einem konischen, verjüngenden Schlauchaufsatz an seinem Auslassende und einen dazwischen angeordneten Dichtkragen, und dass das -in den Ausgussstutzen einschraubbares Ende des Adapters mit einem das Behältnis bzw. den Schlauchbeutel öffnenden Mittel versehen ist

Es ist seit langem bekannt, aseptisch, flüssige oder pastöse Massen in geschlossenen Behältnissen, insbesondere in Schlauchbeutel abzupacken. Um diese zu öffnen muss das Behältnis bzw. der Schlauchbeutel aufgeschnitten oder aufgestochen werden. Entsprechend sind Verschlüsse bekannt, die hierzu besonders geeignet sind, wie dies beispielsweise die WO 95/05996 zeigt. Hier ist auf dem Behältnis ein Ausgussstutzen mit Flansch befestigt, wobei dieser Ausgussstutzen ein Innengewinde aufweist in dem ein Durchstosser mit Aussengewinde eingeschraubt ist und an seinem untersten Rand mehrere Schneidzähne bzw. Perforierzähne aufweist. Auf dem Ausgussstutzen ist eine Schraubkappe angeordnet, die beim erstmaligen Aufschrauben den Durchstosser nach unten bewegt und dabei das Behältnis öffnet. Solche Verschlüsse sind insbesondere in der Getränkeindustrie sehr verbreitet. Diese Behältnisse sind relativ rigide und zum Öffnen wird entsprechend eine relativ hohe Kraft benötigt.

Schlauchbeutel mit aseptisch gefüllten Flüssigkeiten insbesondere mit Salzlösung sind insbesondere in der Medizinaltechnik häufig angewendet, wobei diese Schlauchbeutel aus reinem Kunststoff sind und entsprechend flexibel und sich entsprechend auch wesentlich leichter öffnen lassen. Diese Schlauchbeutel sind für relativ kleine Mengen in der Grössenordung von 300 ml bis 1000 ml. So zeigt beispielsweise die US 4257535 eine Einrichtung auf zur Bereitstellung von fliessfähigen Medien, die aseptisch abgepackt sind und einen Ausgussstutzen mit einem Flansch aufweisen. In diesen Ausgussstutzen wird ein becherförmiger Zapfen eingestossen, der zentrisch einem beidseitig offenen Führungsrohrabschnitt aufweist in den ein Adapter eingesteckt werden kann. Der Adapter besitzt als öffnendes Mittel einen spitz zulaufend gestalteten Zapfen der in den Führungsrohrabschnitt eingeschoben werden kann und die Folie des Schlauchbeutels durchstechen kann. Die entsprechend sich bildende Öffnung ist relativ kein und der anliegende Druck im Schlauchbeutel relativ gering. Sogar wenn beim Einstechen der Schlauchbeutel leicht komprimiert wird, baut sich nur ein relativ geringer erhöhter statischer Druck auf. Entsprechend sind die hierbei auftretenden Dichtungsprobleme relativ gering. Eine relativ ähnliche Lösung weist auch die US Patentanmeldung 2008/0029540 auf. Hier ist der durchstechende Adapter zusätzlich mit Perforier- und/oder Schneidzähnen versehen. Auch hier ist die Dichtungsproblematik kaum relevant. Zudem ist diese Lösung nicht für aseptisch geschlossene Behältnisse konzipiert, sondern auf dem Ausgussstutzen ist ein stopfenartiger Deckel aufgesetzt, der wiederum eine becherförmige Aufnahme hat, der jedoch zum Behältnis hin mittels einer Membran geschlossen ist. Der Adapter, der als Durchstosser konzipiert ist, durchstösst die Membran des Stopfens.

Dasselbe Konzept zeigt auch die JP 56048965 A.

Auch die GB 2154991 zeigt eine Einrichtung zur Bereitstellung von fliessfähigen Medien, die aseptisch verpackt in einem vollständig geschlossenen Behältnis bzw. in einem Schlauchbeutel anliegen. Das hier gezeigte Konzept entspricht der zuvor beschriebenen Lösung weitgehend, doch ist hier auf dem Ausgussstutzen mittels eines Bajonettverschlusses praktisch ein Führungszylinder angeformt, indem ein Injektionskolben anschliesst mittels dem das aseptisch geschlossene Behältnis ausgestochen werden kann und das besondere ist hier, dass dieser Perphorierkolben im Auslass ein Rückschlagventil aufweist, daher das Behältnis mit Unterdruck entleert wird und mittels dem Ventil sichergestellt wird, dass kein Rückfluss stattfindet. Schliesslich ist aus der JP 58037805 U eine Einrichtung zur Bereitstellung von fliessfähigen Medien gemäss dem Oberbegriff des Patentanspruches bekannt.

Es ist nunmehr die Aufgabe der vorliegenden Erfindung eine Einrichtung der eingangs genannten Art für Behältnisse die für grosse Volumen geeignet sind zu schaffen, was einerseits die Problematik mit sich bringt, dass höhere Drucke anliegen als bei Schlauchbeuteln für Infusionen, die entsprechend auch aus dickeren Folien gefertigt werden und bei denen beim Öffnen entsprechend höhere Kräfte erforderlich sind, die auch zu einem erhöhten Innendruck führen. Dies wiederum bedingt eine Lösung, bei der eine verbesserte Dichtung zwischen dem eindringenden Adapter und dem Ausgussstutzen zu erfolgen hat.

Diese Aufgabe löst die eingangs erwähnte Einrichtung dadurch, dass der Ausgussstutzen im oberen Bereich eine zylindrische Wand aufweist, die oberhalb des Flansches in einen doppelwandigen Bereich übergeht, mit einem konisch nach aussen verlaufenden Stützwandbereich und einer konzentrischen dazu konisch nach innen gerichteten, elastischen, dünnwandigen, umlaufenden Dichtschürze.

Weitere vorteilhafte Ausgestaltungsformen des Erfindungsgegenstandes gehen aus den abhängigen Patentansprüchen hervor und deren Bedeutung und Wirkungsweise werden in der nachfolgenden Beschreibung mit Bezug auf die anliegenden Zeichnungen erläutert.

In der Zeichnung ist ein bevorzugtes Ausführungsbeispiel dargestellt. Es zeigt:
- Figur 1: die beiden Einzelteile der erfindungsgemässen Einrichtung zur Bereitstellung von fliessfähigen Medien in einer Explosionszeichung und
- Figur 2: dieselbe Einrichtung im zusammengebauten Zustand in perspektivischer Ansicht schräg von unten.
- Figur 3: zeigt eine Teilansicht der Einrichtung schräg von oben wiederum in perspektivischer Ansicht während
- Figur 4: einen vertikalen Diametralschnitt durch die Einrichtung zeigt bei dem der Adapter in den Ausgussstutzen eingesetzt ist.
- Figur 5: zeigt den Ausgussstutzen für sich allein vor der Erstbenutzung mit einer Abdeckfolie versehen und
- Figur 6: zeigt den Adapter mit einem aufgesetzten Kupplungsschlauchstück.

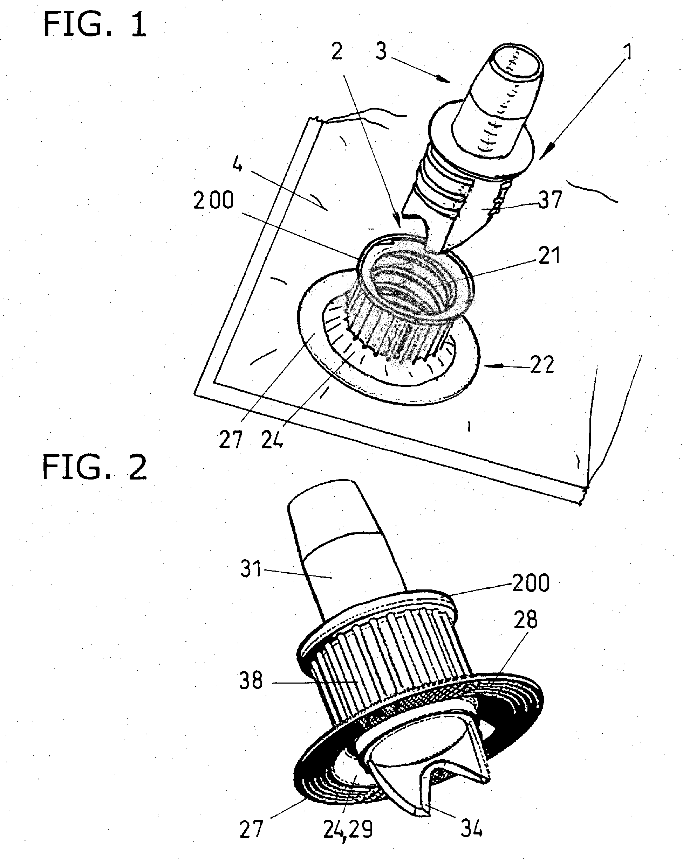

In der Figur 1 ist die Einrichtung, die insgesamt mit 1 bezeichnet ist, in einer perspektivischen Explosionszeichnung dargestellt. Die Einrichtung besteht aus zwei separaten Bestandteilen, nämlich einerseits einem Ausgussstutzen 2 und andererseits einem darin einschraubbaren Adapter 3. Der Ausgussstutzen 2 ist auf einem hier teilweise sichtbaren und vereinfacht dargestellten Behältniss 4 angebracht. Das Behältnis 4 besteht bevorzugterweise aus einem Schlauchbeutel 4, indem flüssige oder pastöse Massen vollständig geschlossen, aseptisch verpackt anliegen. Beim hier vereinfacht dargestellten Schlauchbeutel 4 handelt es sich um einen sogenannten kissenförmigen Schlauchbeutel. Solche Schlauchbeutel werden industriell beziehungsweise gewerblich eingesetzt um flüssige oder pastöse Medien zu transportieren und diese werden daraus meist über ein Pumpsystem dosiert entnommen. Selbstverständlich ist die Einrichtung 1 auch für andere Gestaltungsformen eines Schlauchbeutels geeignet. Zwar ist die erfindungsgemässe Vorrichtung durchaus auch anbringbar auf quaderförmige Behältnisse aus laminiertem Kartonmaterial, doch ist ein solches Behältnis relativ rigide und entsprechend entstehen auch wesentlich geringere Drücke, so dass das entsprechende Dichtungsproblem, welches hier gelöst wird, nicht die gleiche Relevanz hat.

Mit Bezug auf die Figuren 1, 2 und 4 wird nun der Ausgussstutzen im Detail beschreiben. Dieser weist eine zylindrische Mantelwand auf, die den eigentlichen Ausguss bildet und indem ein Innengewinde 21 angeordnet ist. Zur Erhöhung der Griffigkeit ist die zylindrische Mantelwand auf der Aussenseite mit einer Rippung versehen. Am unteren Ende schliesst an der zylindrischen Mantelwand ein konisch nach aussen verlaufender Stützwandbereich 24 an, der dann in den eigentlichen endständigen Flansch 22 übergeht und senkrecht zur Zentrumsachse des Ausgussstutzens 2 verläuft. Dieser äusserste Bereich des endständigen Flansches 22 bildet eine ringförmige Schweissfläche 27. Bevorzugterweise ist die zum Schlauchbeutel zu liegen kommende Seite der Schweissfläche 27 mit Energieleitelementen 28 versehen. Solche Energieleitelemente sind je nach Schweissverfahren jedoch nicht zwingend erforderlich. Auch die Anzahl und Grösse dieser Energieleitelemente können variieren und in der Form unterschiedlich gestaltet sein. Diese werden insbesondere benötigt, wenn die Schweissung mittels Ultraschall erfolgt.

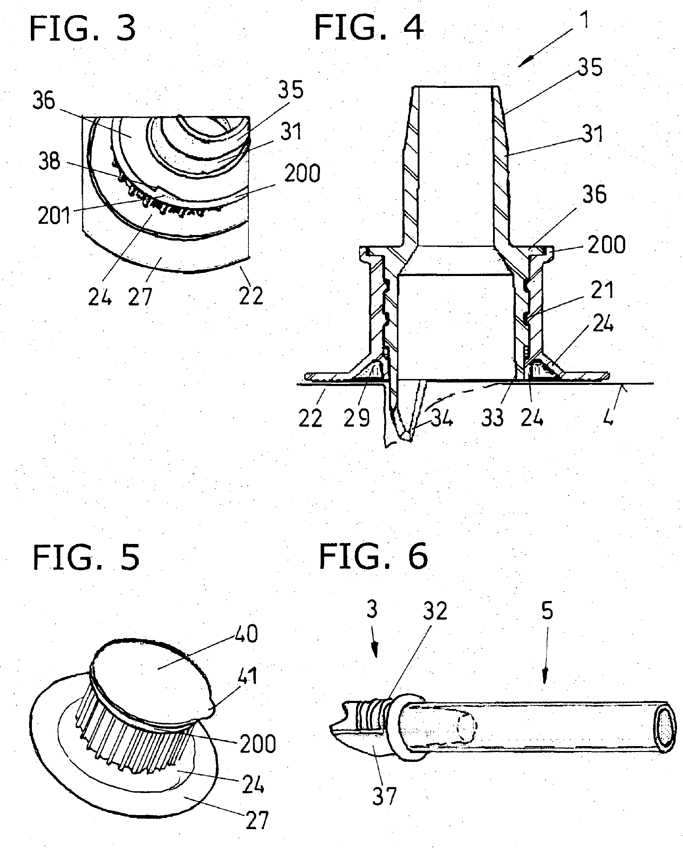

Der auf der Aussenseite erkennbare Stützwandbereich 24 bildet ein Teil eines doppelwandigen Bereiches, der in der Figur 4 deutlich kennbar ist. Der innen liegende Anteil des doppelwandigen Bereiches wird durch eine konzentrisch zur Stützwand 24 verlaufenden Dichtschürze gebildet. Diese Dichtschürze ist jedoch statt nach aussen leicht nach innen geneigt verlaufend. Zwischen der Stützwand 24 und der Dichtschürze verbleibt eine ringförmige Kammer 29.

Im oberen Bereich weist die zylindrische Mantelwand eine Erweiterung 200 auf. Diese Erweiterung 200 kann wie hier in der Figur 4 dargestellt stufenförmig gestaltet sein oder wie in der Figur 1 dargestellt, konisch ausgebildet sein.

In den Ausgussstutzen 2 lässt sich ein Adapter 3 einschrauben. Dieser Adapter 3 ist rohrförmig gestaltet. Ein in der Einbaulage in den Ausgussstutzen hinein schraubbarer Teil bildet das Einlassende während das ausserhalb des Ausgussstutzen, zu liegen kommende Teil das Auslassende 31 bildet. Sowohl der Aussendurchmesser als auch der Innendurchmesser des Einlassendes ist grösser als die entsprechenden Durchmesser des Auslassendes 31. Das Einlassende ist mit einem Aussengewinde 32 versehen. Das untere Ende des Einlassendes ist mit einer unteren planen Endfläche 33 versehen. An dieser und mit dessen zylindrischen Rohrwand fluchtend ist mindestens ein kombinierter Perforier- und Schneidzahn 34 angeformt. Wie dies in den Figuren 1 und 2 ersichtlich ist, können selbstverständlich auch mehr als nur ein Perforier- und Schneidzahn vorhanden sein. Im hier dargestellten Beispiel sind immer zwei kombinierte Perforier- und Schneidzähne vorhanden. Da die Schnittebene in der Figur 4 so gelegt ist, dass diese genau zwischen den beiden Zähnen verläuft ist lediglich ein kombinierter Perforier- und Schneidzahn ersichtlich. Prinzipiell und dies ist aber für die vorliegende Erfindung nicht von Bedeutung kommen auch andere Zahngestaltungen in Frage und insbesondere können auch Perforierzahn und Schneidzahn getrennte unterschiedlich gestaltete Formen haben.

Das Auslassende 31 weist auf der Aussenfläche einen konischen Anzug auf und bildet so einen Schlauchaufsatz 35. Zwischen dem Auslassende 31 und dem Einlassende ist ein Dichtkragen 36 angeformt. Dieser Dichtkragen 36 bildet eine Sekundärdichtung zusammen mit der erwähnten Erweiterung 200. Die Erweiterung 200 und der Dichtkragen 36 sind entsprechend formlich aufeinander abgestimmt. Im hier dargestellten Beispiel ist der Dichtkragen 36 als radial nach aussen gerichteter Ring gestaltet, doch ist es auch möglich diesen Bereich konisch zu gestalten, was dann selbstverständlich zwingend nach sich zieht, dass auch die Erweiterung 200 gegengleich konisch gestaltet sein muss.

Je nach Grösse und der Dicke der Folie des Schlauchbeutels lässt sich der Adapter 3 von Hand vollständig in den Ausguss 2 einschrauben. Da aber sowohl das Auslassende 31 als auch der Dichtkragen 36 eine glatte Oberfläche aufweisen lässt sich kaum eine relevante Kraft ausüben. Bei grösseren Schlauchbeuteln ist aber die Wandstärke beziehungsweise die Dicke der Folie aus der der Schlauchbeutel gefertigt ist so gross, dass dies kaum möglich ist. Hier wird der Adapter 3 vorerst in das Innengewinde 21 der zylindrischen Mantelwand eingeschraubt bis der kombinierte Perforier- und Schneidzahn 34 auf der Folie aufliegt.

Wie in den Figuren 1 und 6 deutlich erkennbar sind am Einlassende plane Angriffsflächen 37 angeformt, die einander diametral gegenüber liegen, so dass der Stutzen mittels einem Werkzeug, beispielsweise einem Gabelschlüssel gefasst und weiter eingeschraubt werden kann, wobei nun die entsprechenden Folien geschnitten werden. Dank der relativ grossen und konisch nach innen gerichteten dünnwandigen Dichtschürze vermag diese auch in den planen Angriffsflächen 37 zu dichten. Dies wird zudem noch unterstützt durch den gegebenenfalls auch der Inhalt auf der Aussenseite der Dichtschürze anliegt und somit eine zusätzliche Dichtkraft ausübt. Insbeosndere wenn der Adapter vollständig eingeschraubt ist und Material aus dem Schlauchbeutel 4 gepresst wird, tritt diese zusätzliche Dichtfunktion ein. Während der Entleerung durch eine Pumpe wird oftmals auch eine Abgabe durch einen Pressdruck auf den Schlauchbeutel 4 bewirkt.

Auf den Adapter 3 kann während der Benutzung der Einrichtung 1 auch immer ungewollt ein Drehmoment wirken. Dieses Drehmoment kann beispielsweise dann auftreten, wenn ein Anschlussschlauch 5 (siehe Figur 6) auf den Schlauchaufsatz 35 befestigt wird. Auch beim Aufsetzen des Anschlussschlauches 5 auf einem Gegenstück, beispielsweise an einer Pumpe oder an einer Dosiervorrichtung kann über dem Anschlussschlauch ein Drehmoment übertragen werden. Um zu vermeiden, dass dabei der Adapter 3 gelockert oder sogar soweit aus dem Ausgussstutzen 2 hinausgeschraubt wird, dass keine dichtende Verbindung mehr besteht, wird bevorzugterweise vorgeschlagen ein entsprechendes Sicherungsmittel vorzusehen. Dieses Sicherungsmittel ist am deutlichsten in der Figur 3 erkennbar. Bei dieser perspektivischen Teilansicht erkennt man eine an der Erweiterung 200 nach innen ragende Rastnocken 201. Entsprechend ist am Dichtkragen 36 eine Einrastausnehmung 38 eingeformt. Beim vollständigen Einschrauben des Adapters 3 in den Ausgussstutzen 2 kommt der Rastnocken 201 in die Einraustausnehmung 38 am Dichtkragen 36 zum Einrasten. Selbstverständlich lässt sich diese, Sicherung im einfachsten Fall auch umgekehrt gestalten, indem die Erweiterung 200 eine entsprechende Einrastausnehmung aufweist und dafür am Dichtkragen 36 ein entsprechend gegengleicher Rastnocken anformen. Auch anderweitige, durchaus gängige Lösungen zur Bildung einer solchen Verdrehsicherung lassen sich realisieren.

Normalerweise wird zusammen mit dem Behältnis beziehungsweise dem Schlauchbeutel 4 der Adapter 3 als gesondertes Teil separat und steril verpackt mitgeliefert. In derselben sterilen oder aseptischen Verpackung lässt sich zudem auch ein Anschlussschlauch 5, gegebenenfalls bereits aufgesetzt wie in der Figur 6 gezeigt, mitliefern.

Der Ausgussstutzen 2, der auf dem Behältnis 4 bereits angebracht ist, kann zusätzlich wie dies die Figur 5 zeigt, mit einer Abdeckung versehen sein. Prinzipiell könnte dies ein eingeschraubter Stopfen sein, der nach der Entfernung fortgeworfen wird. Dies wäre aber eine unnötig teure Variante, die auch kaum sinnvoll ist. Der Schlauchbeutel 4 ist, wie bereits erwähnt aseptisch verschlossen und die Folie des Schlauchbeutels ist genügend stark, dass hier nicht eine Zerstörung der Folie im Bereiche des Ausgussstutzens 2 erfolgt. Entsprechend könnte der Ausgussstutzen 2 auch vollständig offen bleiben. Bevorzugterweise wird jedoch vorgeschlagen den Ausgussstutzen 2 mit einer abziehbaren Folie zu verschliessen. Dies kann beispielsweise eine Aluminiumfolie sein, die mittels Peellack aufgeklebt ist. Eine solche abziehbare Folienabdeckung 40 ist in der Figur 5 dargestellt. Sie hat die Form einer Rondelle mit einer Abziehlasche 41. Die Klebverbindung der abziehbaren Folienabdeckung 40 mit dem Ausgussstutzen erfolgt auf der Stirnfläche der Erweiterung 200. Statt einer Verbindung der Folienabdeckung 40 mit der Erweiterung 200 mittels einem Peelinglack kann dies selbstverständlich auch mittels einer thermischen Schweissung erfolgen. Die Folienabdeckung 40 garantiert, dass keine Verunreinigung im Innenbereich, der von der zylindrischen Mantelwand des Ausgussstutzens 2 begrenzt wird, erfolgen kann.

## Patentansprüche

1. Einrichtung (1) zur Bereitstellung von fliessfähigen Medien, insbesondere von flüssigen oder pastösen Massen, die aseptisch verpackt in einem vollständig geschlossenen Behältnis resp. Schlauchbeutel anliegen, umfassend einen Ausgussstutzen (2) mit einem Flansch, der auf dem Schlauchbeutel (4) befestigt ist, wobei der Ausgussstutzen (2) in einer Mantelwand ein Innengewinde (21) aufweist, sowie einen rohrförmigen Adapter mit einem zum Innengewinde des Ausgussstutzens passenden Aussengewinde an einem Einlassende, und einem konischen, verjüngenden Schlauchaufsatz an seinem Auslassende (31) und einen dazwischen angeordneten Dichtkragen, und dass das in den Ausgussstutzen (2) einschraubbare Ende des Adapters (3) mit einem das Behältnis bzw. den Schlauchbeutel öffnenden Mittel versehen ist, **dadurch gekennzeichnet, dass** der Ausgussstutzen im oberen Bereich eine zylindrische Mantelwand aufweist, die oberhalb des Flansches (22) in einen doppelwandigen Bereich übergeht, mit einer konisch nach aussen verlaufenden Stützwand (24) und einer konzentrischen dazu konisch nach innen geneigten, elastischen, dünnwandigen, umlaufenden Dichtschürze.

2. Einrichtung nach Anspruch 1, **dadurch gekennzeichnet, dass** der Adapter auf seinem mit dem Aussengewinde (32) versehenen Einlassende eine untere plane Endfläche (33) aufweist, an der fluchtend mit dessen zylindrischen Rohrwand mindestens ein kombinierter Perforier- und Schneidezahn angeformt ist.

3. Einrichtung nach Anspruch 1, **dadurch gekennzeichnet, dass** das Aussengewinde am Adapter in vollständig eingeschraubtem Zustand oberhalb des doppelwandigen Bereiches bzw. oberhalb der Dichtschürze endet.

4. Einrichtung nach Anspruch 1, **dadurch gekennzeichnet, dass** die Mantelwand des Ausgussstutzens (2) im obersten Bereich eine Erweiterung aufweist in der der Dichtkragen des Adapters in eingeschraubtem Zustand vollständig Aufnahme findet.

5. Einrichtung nach Anspruch 4, **dadurch gekennzeichnet, dass** die Erweiterung stufenförmig oder konisch gestaltet ist und der Dichtkragen gegengleich geformt ist.

6. Einrichtung nach Anspruch 4, **dadurch gekennzeichnet, dass** am Dichtkragen und an der Erweiterung gegengleiche Arretiermittel angebracht sind, die ein Auseinanderschrauben von Ausgussstutzen und Adapter nach dem vollständigen Einschrauben des Adapters in den Ausgussstutzen verhindern.

7. Einrichtung nach Anspruch 1, **dadurch gekennzeichnet, dass** vor dem Einschrauben des Adapters der Ausgussstutzen mittels einer abziehbaren Abdeckfolie verschlossen ist.

8. Einrichtung nach Anspruch 1, **dadurch gekennzeichnet, dass** auf dem Adapter ein thermoplastischer Schlauch auf dessen Schlauchaufsatz aufgestellt ist.

9. Einrichtung nach Anspruch 8, **dadurch gekennzeichnet, dass** der Adapter mit dem aufgesetzten Schlauch steril verpackt und geliefert wird.

## Claims

1. Assembly (1) for providing free-flowing media, in particular liquid or pasty compounds, which are available so as to be aseptically packed in a completely closed container or tubular pouch, respectively, comprising a discharge connector (2) having a flange which is fastened to the tubular pouch (4), wherein the discharge connector (2) has an internal thread (21) in a sleeve wall, and at an inlet end a tubular adaptor having an external thread which matches the internal thread of the discharge connector, and a conical tubular attachment which tapers off at the outlet end (31) of said discharge connector (2), and a sealing collar which is disposed therebetween, and wherein the end of the adaptor (3) which is screwable into the discharge connector (2) is provided with a means which opens the container or the tubular pouch, respectively, **characterized in that** the discharge connector in the upper region has a cylindrical sleeve wall which above the flange (22) transcends into a double-walled region, having a support wall (24) which runs outward in a conical manner and an encircling, thin-walled, elastic sealing valance which is conically inclined and concentric in relation to said support wall (24).

2. Assembly according to Claim 1, **characterized in that** the adaptor on its inlet end which is provided with the external thread (32) has a lower planar end face (33) on which at least one combined perforating-and-cutting tooth is moulded so as to be flush with the cylindrical tubular wall of said adaptor.

3. Assembly according to Claim 1, **characterized in that** the external thread in the adaptor in the fully screwed-in state terminates above the double-walled region or above the sealing valance, respectively.

4. Assembly according to Claim 1, **characterized in that** the sleeve wall of the discharge connector (2) in the uppermost region has a widening in which the sealing collar of the adaptor is completely received in the screwed-in state.

5. Assembly according to Claim 4, **characterized in that** the widening is designed so as to be stepped or conical, and that the sealing collar is shaped so as to be mutually complementary.

6. Assembly according to Claim 4, **characterized in that** mutually complementary arresting means which prevent the discharge connector and the adaptor from being screwed apart after the adaptor has been completely screwed into the discharge connector are fitted on the sealing collar and on the widening.

7. Assembly according to Claim 1, **characterized in that** the discharge connector is sealed using a detachable cover film, prior to the adaptor being screwed in.

8. Assembly according to Claim 1, **characterized in that** a thermoplastic tube is erected on the adaptor, so as to be on the tubular attachment thereof.

9. Assembly according to Claim 8, **characterized in that** the adaptor having the attached tube is packed and shipped so as to be sterile.

## Revendications

1. Dispositif (1) pour distribuer des milieux coulants, en particulier des masses fluides ou pâteuses, emballés de manière aseptique, qui sont situés dans un récipient ou un sachet tubulaire complètement fermé, comprenant un raccord verseur (2) avec une bride qui est fixée sur le sachet tubulaire (4), le raccord verseur (2) présentant un filetage intérieur (21) dans une paroi d'enveloppe, et un adaptateur de forme tubulaire avec un filetage extérieur au niveau d'une extrémité d'entrée, s'adaptant au filetage intérieur du raccord verseur, et un chapeau de tube conique se rétrécissant, au niveau de son extrémité de sortie (31), et un bord d'étanchéité disposé entre eux, et l'extrémité de l'adaptateur (3) pouvant être vissée dans le raccord verseur (2) étant pourvue d'un moyen ouvrant le récipient ou le sachet tubulaire, **caractérisé en ce que** le raccord verseur présente dans la région supérieure une paroi d'enveloppe cylindrique qui se prolonge au-dessus de la bride (22) dans une région à double paroi, avec une paroi de support (24) s'étendant coniquement vers l'extérieur et une jupe d'étanchéité périphérique, à paroi mince, élastique, inclinée coniquement vers l'intérieur, concentrique par rapport à celle-ci.

2. Dispositif selon la revendication 1, **caractérisé en ce que** l'adaptateur présente sur son extrémité d'entrée pourvue du filetage extérieur (32) une surface d'extrémité inférieure plane (33) sur laquelle est façonnée en affleurement avec sa paroi de tube cylindrique au moins une dent combinée de perforation et de coupe.

3. Dispositif selon la revendication 1, **caractérisé en ce que** le filetage extérieur sur l'adaptateur se termine dans l'état complètement vissé au-dessus de la région à double paroi ou au-dessus de la jupe d'étanchéité.

4. Dispositif selon la revendication 1, **caractérisé en ce que** la paroi d'enveloppe du raccord verseur (2) dans la région la plus supérieure présente un élargissement dans lequel est complètement reçu le bord d'étanchéité de l'adaptateur dans l'état vissé.

5. Dispositif selon la revendication 4, **caractérisé en ce que** l'élargissement est configuré sous forme étagée ou conique et le bord d'étanchéité est formé de manière diamétralement opposée.

6. Dispositif selon la revendication 4, **caractérisé en ce que** des moyens de blocage diamétralement opposés sont montés sur le bord d'étanchéité et l'élargissement, lesquels empêchent un dévissage du raccord verseur et de l'adaptateur après le vissage complet de l'adaptateur dans le raccord verseur.

7. Dispositif selon la revendication 1, **caractérisé en ce qu'**avant le vissage de l'adaptateur, le raccord verseur est fermé au moyen d'un film de recouvrement pelable.

8. Dispositif selon la revendication 1, **caractérisé en ce qu'**un tube thermoplastique est placé sur l'adaptateur, sur son chapeau de tube.

9. Dispositif selon la revendication 8, **caractérisé en ce que** l'adaptateur avec le tube posé dessus est emballé et fourni à l'état stérile.
